# EUROPEAN PATENT APPLICATION

(11) **EP 2 073 458 A1**
(43) Date of publication of application: **24.06.2009**
(21) Application number: 07024986.7
(22) Date of filing: 21.12.2007
(51) Int. Cl.: H04L 12/56

(54) **Method and device for sharing traffic in a network and communication system comprising such device**

(71) Applicant: Nokia Siemens Networks Oy, 02610 Espoo (FI)
(72) Inventor: Arbel, Shachar, 46302 Herzeliya (IL)
(74) Representative: Bruglachner, Thomas E.

(57) **Abstract**

A method and a device for sharing traffic in a network are provided, the method comprising the steps of (i) allocating at least one link for traffic to be conveyed; (ii) allocating at least one extra link; and (iii) wherein the at least one extra link is used for traffic that cannot be conveyed via the at least one link. Further, a communication system comprising such device is provided.

## Description

The invention relates to a method and to a device for sharing traffic in a network and to a communication system comprising such a device.

Current networks support different traffic classes guaranteeing different bandwidths at different degrees of reliance.

A "best effort traffic" is provided, e.g., to residential customers for Internet access. Such traffic should be kept at a reasonable quality for the residential customers to maintain a high level of acceptance in their Internet service.

However, from a network's perspective there is a difficulty: Allocating bandwidth in order to guarantee a certain amount of traffic to the user bears the disadvantage that the best effort traffic deteriorates, because allocated bandwidth will not be available for such best effort traffic even if there is no traffic at all on a link for which bandwidth has been allocated (fixed). On the other hand, if bandwidth is also allocated for best effort traffic, due to its inflexibility this will most likely lead to an inefficient utilization of the overall capacity available.

As an example, a customer may have a service level agreement with an operator that guarantees traffic of 8Mbps, but this customer only uses a portion of such traffic, e.g., 4Mbps. Hence, the non-used bandwidth is an inefficient utilization of the line.

On the other hand, a customer may have the same service level agreement (traffic of 8Mbps max), but this customer temporarily needs a higher bandwidth. According to the fixed assignment of 8Mbps this is not possible, the customer will not be able to receive the required data at a higher data rate.

In today's networks load balancing methods are used, wherein the network is configured in a way that allows different sources of data to share a Link Aggregation Group (LAG). The LAG functionality is to bind two or more physical links into a single (virtual) link. The main reason to use LAG is for resiliency, but it can also be used for bandwidth sharing.

It is a disadvantage of LAG that a physical port can only belong to or participate in one LAG only. Further, the LAG bandwidth is limited to the sum of the port bandwidths and it cannot be dynamically increased. It is also detrimental that LAG bandwidth granularity is based on the single port bandwidth, there is no option to share a portion of traffic that is different to this port bandwidth.

The problem to be solved is to overcome the disadvantages as stated before and in particular to provide an efficient approach to dynamically utilize traffic conveyed via several links within a network.

This problem is solved according to the features of the independent claims. Further embodiments result from the depending claims.

In order to overcome this problem, a method for sharing traffic in a network is provided comprising the following steps:
- allocating at least one link for traffic to be conveyed;
- allocating at least one extra link;
- wherein the at least one extra link is used for traffic that cannot be conveyed via the at least one link.

Allocation of at least one (conventional) link and/or of at least one extra link can be done in particular by configuring at least one port and/or at least one line interface card (LIC) accordingly.

Hence, the extra link can be used to convey traffic, e.g., in case one of the links cannot cope with the data rate of the incoming traffic. This is in particular useful as the at least one extra link can be used as a sharing medium for several (conventional) links.

This advantageously improves the experience of a user with a network service as s/he may be able to obtain a higher bandwidth in case there is any bandwidth available or currently not in use.

In an embodiment, traffic from different sources is conveyed separately via the at least one extra link.

In another embodiment, traffic for different destinations is conveyed separately via the at least one extra link.

In a further embodiment, traffic of different type is conveyed separately via the at least one extra link.

In particular, low priority traffic may be conveyed via said at least one extra link.

In a next embodiment, the at least one extra link is used in case traffic via the at least one link reaches a predetermined threshold.

Hence, if the traffic via the (conventional) link reaches a predetermined threshold (value), the at least one extra link is used for conveying at least a portion of said traffic. In other words, upon reaching said threshold, a portion of the traffic may be redirected via the at least one extra link.

It is also an embodiment that said predetermined threshold is or is associated with a bandwidth limit.

The threshold value may amount to a certain percentage of a maximum bandwidth the actual link provides and/or is able to cope with.

Pursuant to another embodiment, said traffic is or is associated with a particular link or with a bundle of links.

Accordingly, the traffic may be conveyed via one link or via a bundle comprising several links.

According to an embodiment, the at least one extra link is at least partially used for traffic that cannot be conveyed via the at least one link.

In particular, the at least one extra link may also be utilized for further traffic to be conveyed.

It is to be noted that traffic refers to all kind of data and/or signals to be conveyed or transmitted (and received) via, e.g., a link, a line or a port.

According to another embodiment, traffic received via said at least one extra link is re-ordered and/or bundled.

Hence, at a receiving side, the traffic arriving may be resorted, re-ordered or the like via, e.g., dynamic LAG control means.

In yet another embodiment, the at least one extra link is used for low priority traffic in particular if the at least one extra link provides a lower bandwidth capability than the at least one link.

According to a next embodiment, the at least one extra link is used for high priority traffic in particular if the at least one extra link provides a higher bandwidth capability than the at least one link.

The problem stated above is also solved by a device for sharing traffic comprising a processor unit that is equipped and/or arranged such that the method as described herein is executable on said processor unit.

According to an embodiment, the device is a communication device, in particular a switch or a router.

The problem stated supra is further solved by a communication system comprising the device as described herein.

Embodiments of the invention are shown and illustrated in the following figures:
- Fig.1: shows an example of a automated sharing of bandwidth between two network elements that may be realized as switches or routers;
- Fig.2: shows a Link Aggregation Group (LAG) scenario comprising a network element that is connected to another network element via 4 links each providing a bandwidth of 1Gbps, wherein two links are combined to a link aggregation group (2Gbps bundle), respectively;
- Fig.3: shows a scenario utilizing an automated sharing mechanism.

The approach provided herewith in particular is an automated sharing mechanism that allows an improved utilization of an available bandwidth within a network.

Advantageously, this approach allocates bandwidth dynamically when it is required, without neglecting guaranteed traffic.

This may preferably be realized based at least partially on one of the following mechanisms:
a. When allocating a link for each traffic (can be realized as a virtual LAN (VLAN) and/or as an Multiprotocol Label Switching (MPLS) tunnel), an extra link (spare link) is allocated. This link can be used by any traffic that cannot be sent over its original (allocated) link.
   Redirecting traffic via the extra link may require security issues. Furthermore, traffic from different sources and traffic of different types may not be mixed.
   It is an option, that more than one extra link is allocated and utilized.
b. When a traffic on a specific link reaches an upper bandwidth limit, the link may borrow bandwidth from another link with partial bandwidth utilization.
   This mechanism may in particular guarantee the parameters set forth in the service level agreement of the lender link.
   An implementation may be based on a manipulation of thresholds and/or queue sizes. The queues may be processed in particular according to a "round robin" scheme.
c. When traffic in a specific pipe (bundle of links) reaches its capacity, it further utilizes at least a portion of bandwidth provided by at least one extra link.

The mechanisms a. to c. above may be utilized separately or in combination(s) thereof.

On a receiving side of a link (or of a bundle of links) a mechanism of bundling and reordering of the original streams (of packets) may be implemented.

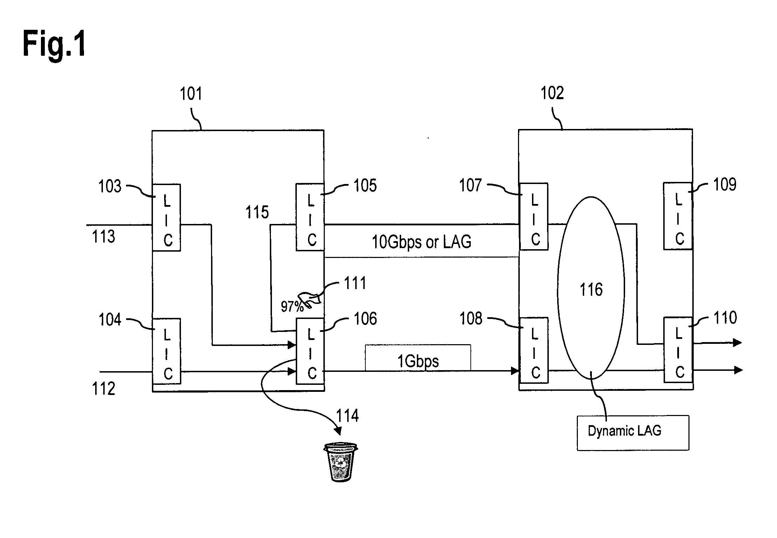

**Fig.1** shows an example of a automated sharing of bandwidth between two network elements 101 and 102. Said network elements 101 and 102 may be realized as switches or routers deployed within a network.

The network element 101 comprises line interface cards LIC 103, 104, 105, 106 and the network element 102 comprises line interface cards LIC 107, 108, 109, 110. Traffic arrives at the network element 101 via line cards 103 and 104. The line interface card 105 is connected to the line interface card 107 via a 10Gbps line or via a Link Aggregation Group LAG, the line interface card 106 is connected to the line interface card 108 via a 1Gbps line. Traffic leaves the network element 102 via line interface cards 109 and 110.

One embodiment of the approach provided herein is to add a threshold flag 111 on an egress port (which is the port that aggregates traffic of N ingress ports). In Fig.1, such flag 111 is added to the line interface card 106.

If a traffic volume on the port of the line interface card 106 exceeds a certain amount, e.g., 97%, the threshold flag 111 is set thereby notifying the system to divert low priority traffic (e.g., best effort traffic) to another port.

The network element 101 hence allocates ad hoc the 10Gbps link connected to its line interface card 105 thereby redirecting a portion of the traffic from the line interface card 106 to the line interface card 105.

Once the threshold flag 111 is reset (at the end of the traffic "bottle neck") the joined link reverts to its previous state.

It is to be noted that there are various alternatives to implement thresholds, threshold ranges or the like.

"Best effort" packets may be dropped during a bottleneck situation at a port of the line interface card 106 in case there is no redirection to an extra link. In case such packet drops can be avoided this will significantly improve the customer's quality experience and reduce an overall traffic load as there is no need for retransmission of (dropped) packets.

It is to be noted that more than one port and/or line and/or link may be aggregated by a system, in particular by a network element 101 or 102, to operate as an alternative port, providing a "1-to-n" load balancing between the ports.

Preferably, different line interface cards may be utilized for load balancing, in particular to also provide some hardware redundancy.

The approach provided herein can in particular be used at different OSI layers, e.g., at layer 2 (Ethernet, ATM), at layer 2.5 (MPLS) and at layer 3 (IP).

Comparing the approach suggested with LAG, the following advantages become apparent:
i. In LAG, the ports must be associated with a Spanning Tree Protocol (STP) according to IEEE802.1s or with other Ethernet Ring Protection (ERP) schemes. Hence, the links share the same logical port.
   The approach provided here allows for some ports to be associated with STP while other ports can be associated with a different mechanism like, e.g., ERP.
   Advantageously, the ports do not share the same logical port.
ii. All physical ports of LAG connect only two network elements, wherein the ports utilized by this approach allow for connection of more than two network elements.
   Furthermore, the approach suggested covers also links that are of different bandwidth (types).
iii. LAG can operate as a single backup link, i.e., as an 1:1-link backup.
   The approach provided herewith reduces the number of backup links and thereby the fiber length. Hence, the backup link supports also 1:N-links.

According to Fig.1 a stream 112 of 500Mbps arrives at the line interface card 104 and a stream 113 of 600Mbps arrives at the line interface card 103. Both streams are internally conveyed to the line interface card 106, which is connected via a 1Gbps link to network element 102. Hence, the streams 112 and 113 cannot be (directly without delay or without partially dropping traffic) forwarded via said 1Gbps link.

Without the approach provided herein, a 100Mbps portion 114 of traffic has to be discarded.

As indicated above, the traffic arriving at the line interface card 106 reaching a certain threshold value (of, e.g., 97%) triggers the flag 111 and initiates the automated sharing mechanism. Hence, a portion 115 of the traffic is conveyed via the line interface card 105 towards network element 102 via the 10Gbps link connecting line interface cards 105 and 107.

At the network element 102, the traffic arriving at the line interface cards 107 and 108 is dynamically combined (see "Dynamic LAG" 116) towards line interface card 110. Said combining may be achieved in case a forwarding data base (FDB) contains the same MAC addresses learned from two different ports.

As a result of the automated sharing mechanism suggested herewith, the performance of low priority Internet services can be significantly improved. This is advantageous to Internet service providers, which may in return raise their rates and/or provide better Quality of Service (QoS) to the home users thereby increasing their reputation.

In addition, the Internet service providers may charge for the a new service like "guaranteed best effort" that may be different to the service "Assured Forwarding", which is limited to ∼30% of the port bandwidth. This "guaranteed best effort" service may assure 20% of the port bandwidth in addition to all unused traffic bandwidth.

A further example of this approach is described hereinafter.

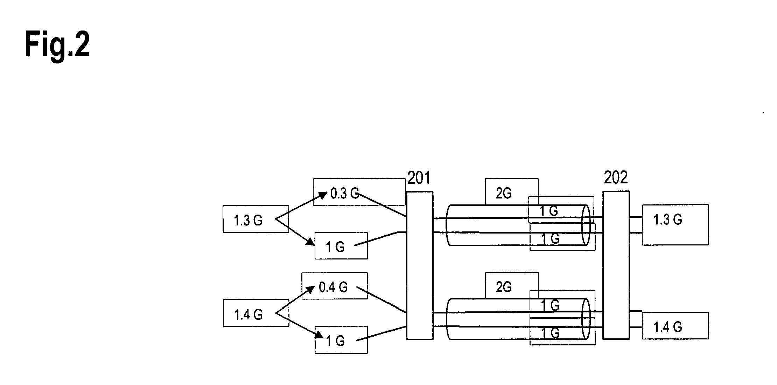

**Fig.2** shows a LAG scenario comprising a network element 201 that is connected to a network element 202 via 4 links each providing 1Gbps. In each case, two links are combined to a link aggregation group (2Gbps bundle).

Two different data streams at 1.3Gbps and at 1.4Gbps result to a bandwidth of 2.7Gbps and are input to the network element 201. According to LAG, each stream is partitioned as follows:
- 1.3Gbps stream = 0.3Gbps + 1.0Gbps;
- 1.4Gbps stream = 0.4Gbps + 1.0Gbps;

Hence, all links between the network elements 201 and 202 are at least partially occupied. The bandwidth utilization of this example results in:
2.7Gbps / 4Gbps = 64%.

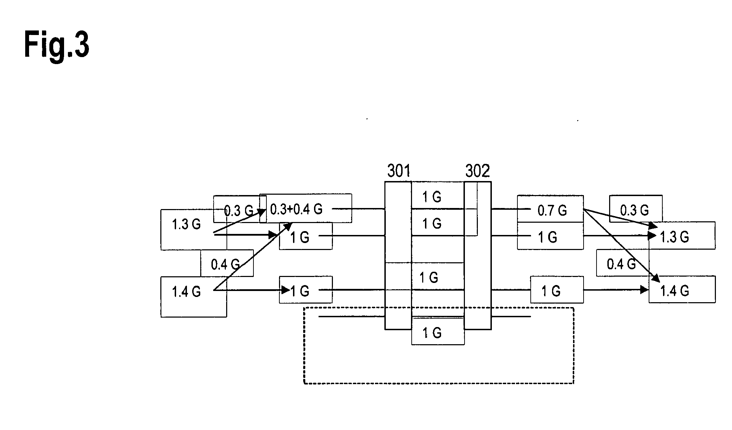

**Fig.3** shows a scenario utilizing an automated sharing mechanism as described herein. A network element 301 is connected to a network element 302 via four links each having a bandwidth of 1Gbps.

Again, two different data streams at 1.3Gbps and at 1.4Gbps result in an overall bandwidth of 2.7Gbps that need to be conveyed from the network element 301 to the network element 302. Similar to the example shown in Fig.2, the streams are partitioned as follows:
- 1.3Gbps stream = 0.3Gbps + 1.0Gbps;
- 1.4Gbps stream = 0.4Gbps + 1.0Gbps;

However, different to Fig.2, the remaining portions of each stream (0.3Gbps and 0.4Gbps) are combined to a 0.7Gbps stream that is conveyed via a third link (capable of transmitting streams up to 1Gbps). As a result, only 3 of the 4 links are required. Hence, the overall bandwidth utilization results in:
2.7Gbps / 3Gbps = 90%.

Hence, the approach suggested leads to a significant improved utilization of the available bandwidth. According to the scenario of Fig.3, the remaining (i.e. not yet occupied) link can be used for different applications or as another (further) extra (shared) link.

## Claims

1. A method for sharing traffic in a network comprising the following steps:
- allocating at least one link for traffic to be conveyed;
- allocating at least one extra link;
- wherein the at least one extra link is used for traffic that cannot be conveyed via the at least one link.

2. The method according to claim 1, wherein traffic from different sources is conveyed separately via the at least one extra link.

3. The method according to any of the preceding claims, wherein traffic for different destinations is conveyed separately via the at least one extra link.

4. The method according to any of the preceding claims, wherein traffic of different type is conveyed separately via the at least one extra link.

5. The method according to any of the preceding claims, wherein the at least one extra link is used in case traffic via the at least one link reaches a predetermined threshold.

6. The method according to claim 5, wherein said predetermined threshold is or is associated with a bandwidth limit.

7. The method according to any of claims 5 or 6, wherein said traffic is or is associated with a particular link or with a bundle of links.

8. The method according to any of the preceding claims wherein the at least one extra link is at least partially used for traffic that cannot be conveyed via the at least one link.

9. The method according to any of the preceding claims wherein traffic received via said at least one extra link is re-ordered and/or bundled.

10. The method according to any of the preceding claims wherein the at least one extra link is used for low priority traffic in particular if the at least one extra link provides a lower bandwidth capability than the at least one link.

11. The method according to any of the preceding claims wherein the at least one extra link is used for high priority traffic in particular if the at least one extra link provides a higher bandwidth capability than the at least one link.

12. A device for sharing traffic comprising a processor unit that is arranged such that the method according of any of the preceding claims is executable on said processor.

13. The device according to claim 12, wherein said device is a communication device, in particular a switch or a router.

14. Communication system comprising the device according to any of claims 12 or 13.
